(19) **Europäisches Patentamt / European Patent Office / Office européen des brevets**

(11) **EP 1 853 018 B1**

(12) **EUROPEAN PATENT SPECIFICATION**

(45) Date of publication and mention of the grant of the patent:
**05.03.2014  Bulletin 2014/10**

(51) Int Cl.:
*H04L 27/26* (2006.01)    *H04L 25/03* (2006.01)

(21) Application number: **07251505.9**

(22) Date of filing: **05.04.2007**

(54) **Encoding and decoding for multicarrier signals.**

Kodierung und Dekodierung für Mehrträgersignale

Codage et décodage pour signaux multiporteuses

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **03.05.2006  US 796886 P**
**03.05.2006  US 796884 P**
**15.06.2006  US 813704 P**

(43) Date of publication of application:
**07.11.2007  Bulletin 2007/45**

(73) Proprietor: **INDUSTRIAL TECHNOLOGY RESEARCH INSTITUTE**
**Hsinchu, Taiwan 310 (CN)**

(72) Inventors:
• **Tsai, Chang-Lan**
**Dongshan Shiang**
**Yilan County 269 (TW)**

• **Hsiao, Chang-Lung**
**Songshan District**
**Taipei City 105 (TW)**
• **Chen, Ren-Jr**
**Sanchong City**
**Taipei County 241 (TW)**
• **Chung, Char-Dir**
**Pingzhen City**
**Taoyuan County 324 (TW)**

(74) Representative: **Nicholls, Michael John**
**J A Kemp**
**14 South Square**
**Gray's Inn**
**London WC1R 5JJ (GB)**

(56) References cited:
**US-A1- 2003 039 306    US-A1- 2003 099 302**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention generally relates to orthogonal frequency division multiplexing (OFDM) technologies and, more particularly, to techniques related to dispersive OFDM coding methods and systems.

The OFDM technique distributes data over a number of spectrally overlapping and coherently orthogonal sub-carriers. Although high spectral compactness can be achieved by applying a large number of multiplexed sub-carriers or channels, pulse shaping is also important in OFDM systems. If an OFDM sub-carrier pulse is not properly shaped, sub-carriers located near band edges often interfere their adjacent channels.

An OFDM sub-carrier pulse used for transmission is often chosen to be rectangular. Forming, modulation, and demodulation of rectangular pulses can be implemented by simple and efficient techniques because the rectangular pulse shape generally leads to a sinc function (i.e., sin(x)/x) type of spectrum of the sub-carriers. However, the rectangular pulse of the OFDM sub-carrier often has relatively large power spectral side lobes that fall off as $f^{-2}$. Thus, spectral efficiency in the rectangular pulse OFDM system often is not optimized.

Certain techniques have been developed to shape the OFDM pulse to suppress side lobes. For example, U.S. Patent No. 6,999,503 issued February 14, 2006, to *Vadde* discloses a cyclic convolver deployed in the frequency domain which may suppress plurality of sub-symbols in the time domain to enhance the bit-rate by dropping a portion of the time domain signals. However, such conventional correlative coding techniques may introduce inter-symbol interference (ISI) and may require a separate traditional post-equalizer.

Further, in wireless communication, wireless channels often have spectral nulls occupying successive sub-carriers. Errors may be bursted if there is an error in one sub-carrier. Thus, OFDM systems with such correlative coding techniques often have relatively high bit-error rate (BER). Moreover, when a cyclic prefix is inserted in a correlatively coded OFDM signal, the waveform of the signal may be noncontinuous and the OFDM system may only achieve relatively low spectral compactness.

US-A1-2003/039306 and US-A1-2003/099302 both disclose OFDM systems on which the precharacterising portions of the independent claims are based.

The present invention provides an OFDM system, an OFDM transmitter, an OFDM receiver and a method for constructing an orthonormal dispersive encoder as defined in the appended claims.

The invention will be further described by way of example with reference to the accompanying drawings, in which:-

Figure 1 shows an exemplary OFDM transmitter consistent with embodiments of the present invention;
Figure 2 shows an exemplary OFDM receiver consistent with embodiments of the invention;
Figure 3 shows an exemplary turbo equalizer;
Figure 4 shows an exemplary OFDM system with transmitting and receiving operations consistent with embodiments of the disclosed invention;
Figure 5 shows an exemplary implementation of a dispersive encoder;
Figure 6A shows a pulse shape or waveform of an OFDM signal without cyclic prefix, consistent with embodiments of the invention;
Figure 6B shows a pulse shape of an OFDM signal with added cyclic prefix, consistent with embodiments of the invention;
Figure 6C shows an example where an OFDM symbol duration is an integer multiple of a guard interval; and
Figure 7 shows an exemplary code design process for constructing orthonormal dispersive codes consistent with embodiments of the invention.

Reference will now be made in detail to exemplary embodiments, which are illustrated in the accompanying drawings. Wherever possible, the same reference numbers will be used throughout the drawings to refer to the same or like parts.

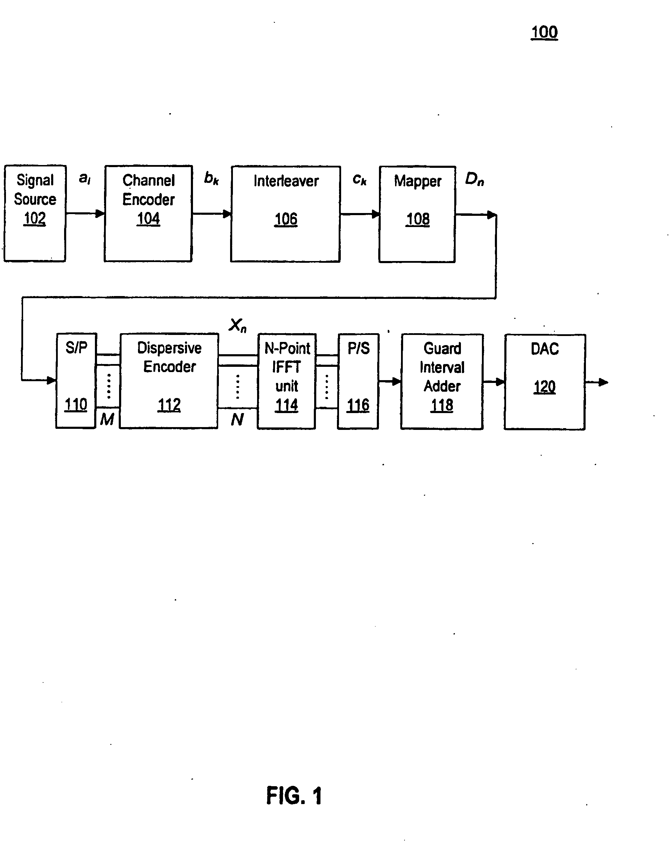

Fig. 1 shows an exemplary OFDM transmitter 100 consistent with embodiments of the present invention. As shown in Fig. 1, OFDM transmitter 100 may include a signal source 102, a channel encoder 104, an interleaver 106, a mapper 108, a serial-to-parallel converter 110, a dispersive encoder 112, an N-point inverse fast Fourier transform (IFFT) unit 114, a parallel-to-serial converter 116, a guard interval adder 118, and a discrete-to-analog converter (DAC) 120. It is understood that the devices listed in this disclosure are for illustrative purposes, certain devices may be removed or added and the number of the devices may be changed without departing from the principles consistent with the invention. Further, any listed device or any combination of one or more listed devices may be implemented by hardware, such as programmable logic devices, field programmable gate arrays (FPGAs), customized VLSI devices, etc., and/or by software executable on a processor, such as microprocessor, digital signal processor (DSP), or a system-in-chip processing system, etc.

Signal source 102 may include any appropriate device providing a data stream to OFDM transmitter 100 for encoding, modulation, and transmission. The data stream from signal source 102 may be represented by information bits $a_i$, where $i$ is an integer with values of 0, ..., to the total length of the information bits. Signal source 102 may be coupled to channel encoder 104 such that information bits $a_i$ are provided to channel encoder 104.

Channel encoder 104 may include any appropriate device performing one or more channel encoding functions. For example, channel encoder 104 may include a block encoder, a convolution encoder, and/or a turbo encoder, etc. The encoded information bits may be represented by $b_k$, where $k$ is an integer with values of 0,..., to the total length of encoded bits. Further, channel encoder 104 may be coupled to interleaver 106 such that encoded bits $b_k$ are provided to interleaver 106.

Interleaver 106 may include one or more appropriate interleavers, such as a random interleaver, a block interleaver, a diagonal interleaver, and/or a circular-shifting interleaver, etc., for interleaving a data sequence, e.g., rearranging the order of a data sequence in a one-to-one deterministic format. Interleaver 106 may be coupled to mapper 108 such that every $N_c$ interleaved bits may be mapped to a corresponding $2^{N_c}$-level symbol, which is denoted by $D_n$, where $N_c$ refers to the number of bits bore by the symbol $D_n$. A symbol, as used herein, may refer to a unit of information represented in a certain format, such as a digital format. A symbol may represent or bear information originally represented by, for example, information bits.

Mapper 108 may be coupled to dispersive encoder 112 through serial-to-parallel (S/P) converter 110 to convert the mapped symbols into a parallel form. Serial-to-parallel converter 110 may include any appropriate serial-to-parallel converter with a *1:M* ratio. After the serial-to-parallel conversion, the converted symbols may be represented by a vector consisting of M symbols. The M symbol output from serial-to-parallel converter 110 may be further provided to dispersive encoder 112.

Dispersive encoder 112 may include any appropriate type of encoder aimed at shaping OFDM signals. A dispersive encoder, as used herein, may refer to any appropriate type of encoder to disperse an information-bearing symbol $D_n$ over several sub-carriers with different weights such that the spectrum of the resulting OFDM signal falls off faster than the spectrum of a rectangularly pulsed OFDM signal (i.e., squared sinc function). Dispersive encoder 112 may disperse an information-bearing symbol over several sub-carriers weighted by pre-selected coefficients of the encoding matrix of the dispersive encoder. Dispersing the symbol over sub-carriers may be equivalent to forming a shaping waveform in the time domain carrying the symbol.

For example, dispersive encoder 112 may include a cyclic convolver, a convolution encoder, or a pre-coding encoder, etc. Further, dispersive encoder 122 may shape the spectrum for each symbol separately. Alternatively, dispersive encoder 112 may disperse a group of symbols over a number of sub-carriers such that these sub-carriers are shared by the group of symbols. However, sub-carriers used by different groups of symbol may not be overlapped, even though the different sub-carriers may have a common feature that the envelope of the pulse shape is zero at the edges of the OFDM symbol duration.

Dispersive encoder 112 may correspond to a dispersive-encode matrix G with dimension $N \times M$ and dispersive code $[G_{m,m}, G_{m+1,m}, \cdots, G_{m+L,m}]^T$, for $m = 0, 1, ..., M\,1$. For example, the dispersive-encode matrix constructed by linear convolution may be represented as:

$$\underline{\mathbf{G}} = \begin{bmatrix} G_{0,0} & 0 & & 0 \\ \vdots & G_{1,1} & & \vdots \\ G_{L,0} & \vdots & \ddots & 0 \\ 0 & G_{L+1,1} & & G_{M-1,M-1} \\ \vdots & 0 & \ddots & \vdots \\ 0 & & & G_{N-1,M-1} \end{bmatrix} \qquad (1),$$

where there are $L+1$ nonzero coefficients in each column, and L is defined the order of the dispersive code. For this case, $L = N-M, (L \geq 0)$.

Dispersive encoder 112 may encode the mapped symbols $\underline{\mathbf{D}}_q = [D_{qM}, D_{qM+1}, \cdots, D_{qM+M-1}]^T$ to generate dispersively encoded signal $\underline{\mathbf{X}}_q = \underline{\mathbf{G}}\mathbf{D}_q$, where $\underline{\mathbf{X}}_q = [X_{qN}, X_{qN+1}, \cdots, X_{qN+N-1}]^T$, and $q$ is an integer with values of 0, ... , to the total number of blocks of encoded symbols. Also, as used herein, the underline of a denotation may reflect that the denotation is a vector or matrix. Further, dispersive encoder 112 may be coupled to inverse fast Fourier transform (IFFT) unit 114 to convert the resulting N outputs ($\underline{\mathbf{X}}_q$) from dispersive encoder 112 to OFDM signals.

IFFT unit 114 may include any appropriate device performing inverse fast Fourier transform functions. IFFT unit 114 may also be referred to as an N-point IFFT in that IFFT unit 114 may perform modulation for N number of orthogonal sub-carriers of OFDM transmitter 100 in parallel. That is, IFFT unit 114 may modulate N symbols onto N orthogonal sub-carriers.

Further, the OFDM signals outputted from IFFT unit 114 for the N number of sub-carriers may be converted to a serial signal sequence by parallel-to-serial (P/S) converter 116. The converted signal sequence may be provided to guard interval adder 118 to add guard intervals to prevent errors caused by multi-path distortion. For example, a guard interval may be a cyclic or periodic extension of the basic OFDM symbol. In one embodiment, the last $N_g$ samples may be extended to the data sequence as a guard interval. For example, the last $N_g$ samples may be copied and prefixed to the front of the N samples.

Further, optionally, guard interval adder 118 may be coupled with a discrete-to-analog converter (DAC) 120. Guard interval adder 118 may provide the $(N+N_g)$ samples to DAC 120. DAC 120 may convert discrete signals or samples, e.g., the $(N+N_g)$ samples, etc., into continuous signals for transmission. In implementation, DAC 120 may include any type of discrete-to-analog device, shaping pulse device, and/or band-pass filter device, as implemented by software, hardware, or both.

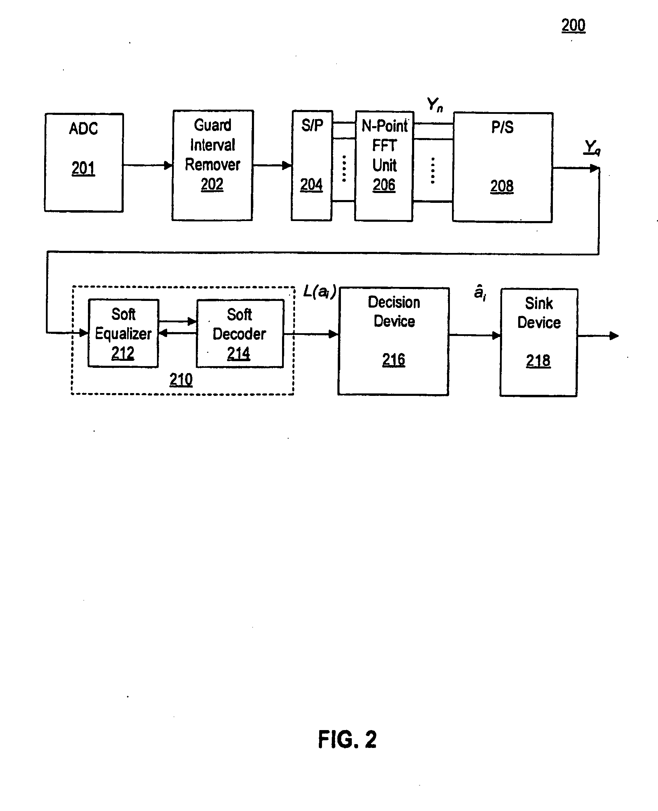

The data sequence from DAC 120 or from guard interval adder 118 may then be modulated to a carrier frequency and be transmitted out through various media, such as air, wires, or cables, etc. The transmitted signals may be received by an OFDM receiver to recover the information bits $a_i$. Fig. 2 shows an exemplary OFDM receiver 200 consistent with embodiments of the invention.

As shown in Fig. 2, OFDM receiver 200 may include an analog-to-discrete converter (ADC) 201, a guard interval remover 202, a serial-to-parallel converter (S/P) 204, an N-point fast Fourier transform (FFT) unit 206, a parallel-to-serial converter 208, a turbo equalizer 210, a decision device 216, and a sink device 218.

OFDM receiver 200 receives the signals transmitted by OFDM transmitter 100. The signals received may be continuous or analog signals. ADC 201 may convert the received continuous signals into discrete samples for further processing. ADC 201 may include any appropriate analog-to-discrete converter. Further, ADC 201 may be coupled to guard interval remover 202 such that the converted discrete samples may be provided to guard interval remover 202.

Guard interval remover 202 may include any appropriate device for removing the guard interval added by, for example, guard interval adder 118. For example, guard interval remover 202 may remove the prefixed $N_g$ samples of the transmitted $(N+N_g)$ samples such that only the N samples of non-redundant signals are further processed.

The received signals, with the cyclic prefix removed, may be converted by serial-to-parallel converter 204 to create blocks of N samples of OFDM signals. The N samples may be demodulated by N-point FFT unit 206 to obtain the signals from the N sub-carriers. FFT unit 206 may include any appropriate device capable performing FFT functions to demodulate OFDM signals modulated by, for example, IFFT unit 114. The transformed signals $Y_n$ may be further converted to a signal sequence by parallel-to-serial converter 208.

The signal sequence outputted by parallel-to-serial converter 208 may be represented by blocks of $N$ samples as $\underline{Y}_q = [Y_{qN}, Y_{qN+1}, \cdots, Y_{qN+N-1}]^T$, where $q$ is an integer with values of 0, ... , to the total number of blocks of samples, and the vector may be represented by:

$$\underline{Y}_q = \underline{H}_q \underline{G} \underline{D}_q + \underline{V}_q \qquad (2)$$

where the channel matrix $\underline{H}_q$ and noise vector $\underline{V}_q$ are N-point FFT representations of channel impulse response and additive noise, respectively, of the communication channel through which the signals are transmitted from OFDM transmitter 100 to OFDM receiver 200. For a slow fading channel, the channel matrix $\underline{H}_q$ may be a diagonal channel matrix.

Further, the symbol $D_n$ corresponds to $N_c$ bits $\quad \underline{c}_n = \left[ c_{nN_c}, c_{nN_c+1}, \cdots, c_{nN_c+N_c-1} \right]^T.$

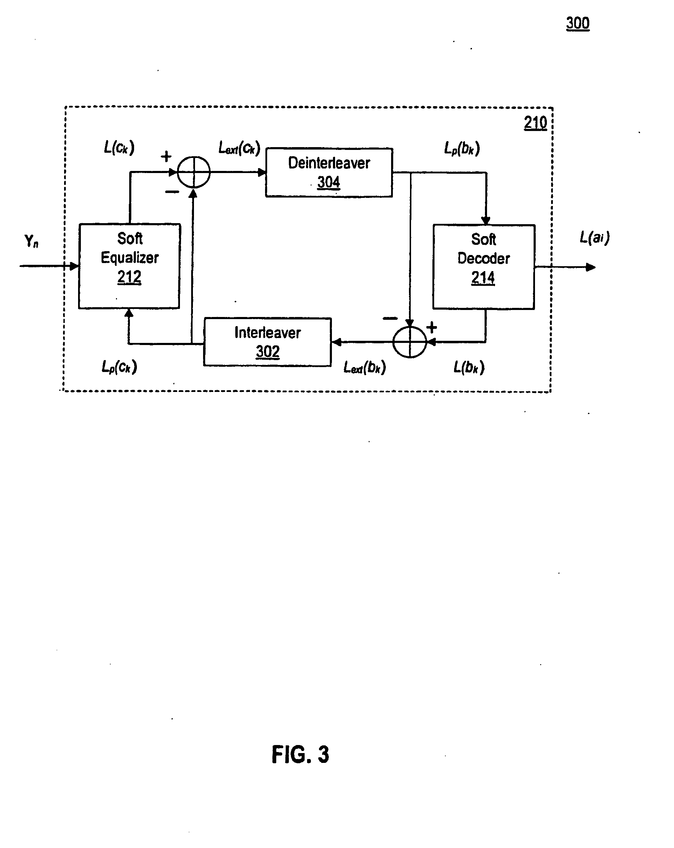

Although the signals transmitted from OFDM 100 are encoded by channel encoder 104 first and further encoded by dispersive encoder 112, OFDM receiver 200 does not employ a separate channel decoder to perform channel decoding. Instead, the demodulated OFDM signal sequence is provided to turbo equalizer 210 for decoding the information bits encoded by both channel encoder 104 and dispersive encoder 112. Fig. 3 shows exemplary turbo equalizer 210 consistent with the disclosed invention.

As shown in Fig. 3, the output sequence $\{Y_n$, for $n = 0,1, ...\}$ is provided to turbo equalizer 210 for iterative decoding and equalizing. The term "turbo equalizer," as used herein, may refer to any appropriate equalizer capable of equalizing and/or decoding information modulated and/or encoded by a concatenation of two or more devices, which may be separated by an interleaver. Further, turbo equalizer 210 may also be treated as a turbo decoder. The term "turbo decoder," as used herein, may refer to any appropriate decoder capable of decoding information encoded by a concatenation of two or more encoders, which may be separated by an interleaver.

Turbo equalizer 210 may include a soft equalizer 212 and a soft decoder 214 coupled through an interleaver 302 and a de-interleaver 304. Soft equalizer 212 may include any appropriate type of channel equalizer capable of performing an equalization function based on a soft-decision method. The term "soft-decision method," as used herein, refers to the technique of allowing multiple versions of outputs from a logic device (e.g., a decoding device, a demodulation device, or an equalization device, etc.) to improve decoding accuracy over hard decision methods, where the output of the logic device is a binary sequence without any extrinsic information. Each version of output may be referred to as a soft estimate.

Soft equalizer 212 may, from the sequence $\{Y_n$, for $n = 0,1,...\}$, obtain soft estimates, $\{L(c_k)$, for $k = 0,1, ...\}$, of information bits $\{c_k$, for $k = 0,1,...\}$, with the aid of prior information $L_p(c_k)$ of $c_k$, where L refers to the log-likelihood ratio (LLR) for a given bit in a received symbol based on the log-likelihood ratios of all the other bits in the received signal sequence. The subscript p means that the LLR represents the prior information.

Further, soft equalizer 212 may output soft estimation, $L(c_k)$, which is a logarithmic ratio of the probabilities of $c_k = 0$ and $c_k = 1$, i.e., $\ln(\mathrm{P}\{c_k = 0\}/\mathrm{P}\{c_k = 1\})$. The soft estimation $L(c_k)$ may be combined with prior information, $L_p(c_k)$, of $c_k$ to generate a sequence of first extrinsic information $L_{ext}(C_k) = L(C_k)-L_p(C_k)$. The sequence of extrinsic information may be provided to de-interleaver 304 and may be de-interleaved by de-interleaver 304 to generate prior information, $L_p(b_k)$, of $b_k$. The term "de-interleaver," as used herein, generally refers to performing reverse operations of an interleaver.

Similarly, estimates from de-interleaver 304, $L_p(b_k)$, may be provided to soft decoder 214. Soft decoder 214 may refer to any appropriate decoder (e.g., a turbo decoder or a convolution decoder, etc.) based on soft-decision methods. Soft decoder 214 may generate soft estimate $L(b_k)$ to be combined with $L_P(b_k)$ to generate a sequence of second extrinsic information $L_{ext}(b_k) = L(b_k)-L_p(b_k)$. Further, interleaver 302 may interleave the sequence of extrinsic information $L_{ext}(b_k) = L(b_k)-L_p(b_k)$ to generate prior information, $L_p(c_k)$, of $c_k$, to be used by soft equalizer 212 for a next iteration. After a sufficient number of iterations, soft decoder 214 may generate desired soft estimates of information bits, $L(a_i)$, which may be referred to as the logarithmic ratio of the probabilities of $a_i = 0$ and $a_i = 1$.

For example, when channel encoder 104 is configured with $K_1$ inputs and $K_2$ outputs, the $K_2$ prior information $[L_p(b_{iK_2}),L_p(b_{iK_2+K_2-1}),\cdots,L_p(b_{iK_2+K_2-1})]^T$ can produce soft estimates $[L(a_{iK_1}),\ L(a_{iK_1+1}),\cdots,L(a_{iK_1+K_1-1})]^T$ and $[L(b_{iK_2}),L(b_{iK_2+1}),\cdots,L(b_{iK_2+K_2-1})]^T$. The interleaved sequence of extrinsic information $L_{ext}(b_k)=L(b_k)-L_p(b_k)$ may be further provided to soft equalizer 212 for a next iteration. After a number of iterations, soft decoder 214 may generate the desired soft estimates $L(a_i)$ at the last iteration.

Returning to Fig. 2, the desired soft estimates $L(a_i)$ may be further provided to decision device 216 to make a decision on the information bits based on the soft estimates $L(a_i)$. Decision device 126 may include any appropriate logic device for performing decision functions of determining soft estimation and/or determining information bits based on soft estimations. For example, decision device 216 may decide $a_i = 0$ if $L(a_i) \geq 0$, or $a_i = 1$ if $L(a_i) < 0$, and may also provide determined information bits $\hat{a}_i$ to sink device 218. Sink device 218 may include any appropriate device that further processes the information bits. Sink device 218 may process the information bits $\hat{a}_i$ as the original information bits $a_i$ and provide the processed data to other applications or devices.

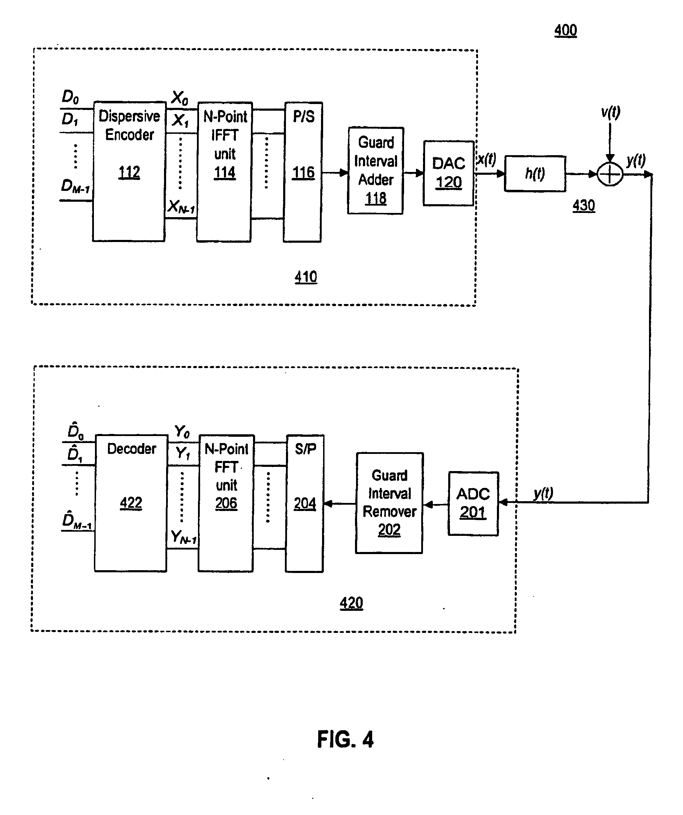

As explained above, OFDM transmitter 100 and OFDM receiver 200 may be used correspondingly in communication applications. Fig. 4 shows an exemplary OFDM system with both transmitting operations and receiving operations. As shown in Fig. 4, OFDM system 400 may include an OFDM transmitter 410 and an OFDM receiver 420. OFDM transmitter 410 may include devices described in Fig. 1 and may operate in the ways described above with respect to OFDM transmitter 100 in Fig. 1. For example, OFDM transmitter 410 may include dispersive encoder 112, N-point IFFT unit 114, parallel-to-serial (P/S) converter 116, guard interval adder 118, and discrete-to-analog converter (DAC) 120.

OFDM receiver 420, on the other hand, may include N-point FFT unit 206, serial-to-parallel converter 204, guard interval remover 202, and analog-to-discrete converter (ADC) 201, as included in Fig. 2 and described with respect to OFDM receiver 200. Further, OFDM receiver 420 may include a dispersive decoder 422, as an alternative to turbo equalizer 210. It is understood that the devices in OFDM system 400 are not intended to be limiting, and that other devices may be included, for example, to provide dispersive encoder 112 proper signals and/or to process signals from dispersive decoder 422.

As explained above, during operations of OFDM system 400, a block of M complex symbols $\underline{D}_q = [D_{qM},D_{qM+1},\cdots,D_{qM+M-1}]^T$ are provided to dispersive encoder 112. Dispersive encoder 112 may disperse the symbols over N sub-carriers, denoted as $\underline{X}_q = [X_{qN},X_{qN+1},\cdots,X_{qN+N-1}]^T$, where $N$ and $M$ are integers and $N \geq M$. Dispersive encoder 112 may have an encoding matrix $\underline{G} = [\underline{G}_0,\underline{G}_1, ... , \underline{G}_{M-1}]$ corresponding to generator matrixes of symbols transported by sub-carriers. For example, dispersive encoder 112 may separately encode each symbol with different weights as the following:

$$\underline{X}_{q,m} = \begin{bmatrix} X_{qN,m} \\ X_{qN+1,m} \\ \vdots \\ X_{qN+N-1,m} \end{bmatrix} = \begin{bmatrix} G_{0,m} \\ G_{1,m} \\ \vdots \\ G_{N-1,m} \end{bmatrix} D_m = \underline{G}_m D_{qM+m}, \quad \text{for } m = 0,1,\cdots,M-1. \quad (3)$$

The $m$-th symbol $D_m$ is carried by the n-th sub-carrier if $G_{n,m} \neq 0$ .

The encoded symbols are outputted from dispersive encoder 112 and provided to N-point IFFT unit 114. N-point IFFT unit 114 may modulate the encoded symbols with N sub-carriers, equally spaced by $\omega_d = 2\pi/T_d$, where $T_d$ is defined as a useful OFDM symbol duration.

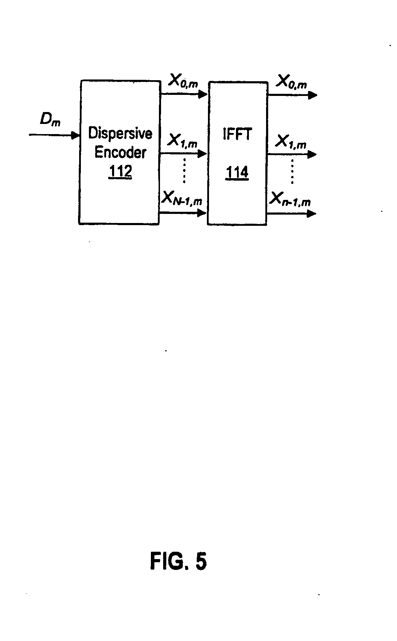

Fig. 5 shows an exemplary per-symbol dispersive encoder configuration. As shown in Fig. 5, for the $m$-th symbol $D_m$, the modulated OFDM signal outputted from IFFT device 114 may be represented by:

$$x_{qN+n,m} = \frac{1}{\sqrt{N}} \sum_{k=0}^{N-1} X_{qN+k,m} e^{\frac{j2\pi kn}{N}} = D_{qM+m} \frac{1}{\sqrt{N}} \sum_{k=0}^{N-1} G_{k,m} e^{\frac{j2\pi kn}{N}} = D_{qM+m} g_{n,m} \, , (4),$$

and

$$\underline{x}_{q,m} = [x_{qN,m}, x_{qN+1,m}, \cdots, x_{qN+N-1,m}]^T = D_{qM+m} \underline{g}_m \, . \tag{5}$$

where $\mathbf{g}_m = [g_{0,m}, g_{1,m}, \cdots, g_{N-1,m}]^T$.

Returning to Fig. 4, the M symbols are separately encoded and modulated by dispersive encoder 112 and IFFT unit 114, respectively. The $M$ dispersively encoded and modulated sequences $\underline{x}_{q,m}$, for m = 0, $1$, ..., $M$-1, are converted by parallel-to-serial converter 116 to become an OFDM symbol sequence, which may be further summed for transmission:

$$\underline{x}_q = [x_{qN}, x_{qN+1}, \cdots, x_{qN+N-1}]^T = \sum_{m=0}^{M-1} \underline{x}_{q,m} = \sum_{m=0}^{M-1} D_{qM+m} \underline{g}_m \, . \tag{6}$$

Optionally, guard interval adder 118 may be coupled to parallel-to-serial converter 116 to add a guard interval for the OFDM signals. Guard interval adder 118 may add cyclic prefixes to OFDM signals (CP-OFDM). For example, guard interval adder 118 may copy the last $N_g$ samples of $\underline{x}_q$ and prefix them in front of the OFDM symbol **x** to generate a prefixed OFDM symbol

$$\underline{x}_q^{CP} = [x_{qN+N-N_g}, \cdots, x_{qN+N-1}, x_{qN}, x_{qN+1}, \cdots, x_{qN+N-1}]^T \, .$$

In certain other embodiments, guard interval adder 118 may add zero padding to OFDM signals (ZP-OFDM) without adding any cyclic prefix. Guard interval adder 118 may place $N_g$ zeros in front of **x** to generate a zero-padded

OFDM symbol $\underline{x}_q^{ZP} = [0, \cdots, 0, x_{qN}, x_{qN+1}, \cdots, x_{qN+N-1}]^T$ .

As explained above, dispersive encoder 112 may also apply a grouped dispersive encoding configuration. For example, for OFDM signals with a cyclic prefix given by $N_g = N/Q$, where $Q$ is an integer, dispersive encoder 112 may divide the sub-carriers and symbols into $Q$ groups. Each group uses $N'=N/Q$ sub-carriers. The sub-carriers in each group are separated by Q. At the same time, the information symbols are partitioned into $Q$ groups. The symbols in each group are dispersed over sub-carriers of one group. However, the sub-carriers of different groups are not overlapped. For example, where $N = 16$, $Q = 4$, and $M = 8$, the encoding matrix $\underline{\mathbf{G}} = [\underline{\mathbf{G}}_0, \underline{\mathbf{G}}_1, \cdots, \underline{\mathbf{G}}_{M-1}]$ may be represented by:

$$\underline{G} = \begin{bmatrix} G_{0,0} & 0 & 0 & 0 & 0 & 0 & 0 & 0 \\ 0 & 0 & G_{1,2} & 0 & 0 & 0 & 0 & 0 \\ 0 & 0 & 0 & 0 & G_{2,4} & 0 & 0 & 0 \\ 0 & 0 & 0 & 0 & 0 & 0 & G_{3,6} & 0 \\ G_{4,0} & G_{4,1} & 0 & 0 & 0 & 0 & 0 & 0 \\ 0 & 0 & G_{5,2} & G_{5,3} & 0 & 0 & 0 & 0 \\ 0 & 0 & 0 & 0 & G_{6,4} & G_{6,5} & 0 & 0 \\ 0 & 0 & 0 & 0 & 0 & 0 & G_{7,6} & G_{7,7} \\ G_{8,0} & G_{8,1} & 0 & 0 & 0 & 0 & 0 & 0 \\ 0 & 0 & G_{9,2} & G_{9,3} & 0 & 0 & 0 & 0 \\ 0 & 0 & 0 & 0 & G_{10,4} & G_{10,5} & 0 & 0 \\ 0 & 0 & 0 & 0 & 0 & 0 & G_{11,6} & G_{11,7} \\ 0 & G_{12,1} & 0 & 0 & 0 & 0 & 0 & 0 \\ 0 & 0 & 0 & G_{13,3} & 0 & 0 & 0 & 0 \\ 0 & 0 & 0 & 0 & 0 & G_{14,5} & 0 & 0 \\ 0 & 0 & 0 & 0 & 0 & 0 & 0 & G_{15,7} \end{bmatrix}$$

where columns 1 and 2 are group 0; columns 3 and 4 are group 1; columns 5 and 6 are group 2; and columns 7 and 8 are group 3. Further, for $m$-th group, where $m \in \{0, 1, 2, 3\}$, the corresponding sub-carriers may be calculated as: $k = m + lQ$, for $l = 0, 1, ..., N/Q\text{-}1$.

While the use of channel coding, interleaving, and turbo equalizing may be used to lower the bit-error rate (BER) of an OFDM system, the efficiency of the OFDM system may also be improved by desired spectral shaping.

As illustrated above, OFDM transmitter 410 may optionally add cyclic prefixes to encoded OFDM signals. OFDM transmitter 410 may generate different pulse shapes that suppress spectral side-lobes of the OFDM signals based on whether guard intervals are added. From equation (6), the time domain waveform of the OFDM signals is a superposition of $\mathbf{g}_m$, which is the IFFT of $\underline{G}_m = [G_{0,m}, G_{1,m}, \cdots, G_{N\text{-}1,m}]^T$, as in equations (4)-(5). Further, $\mathbf{g}_m$ is weighted by the symbols $D_m$, for $m = 0, 1, ..., M\text{-}1$.

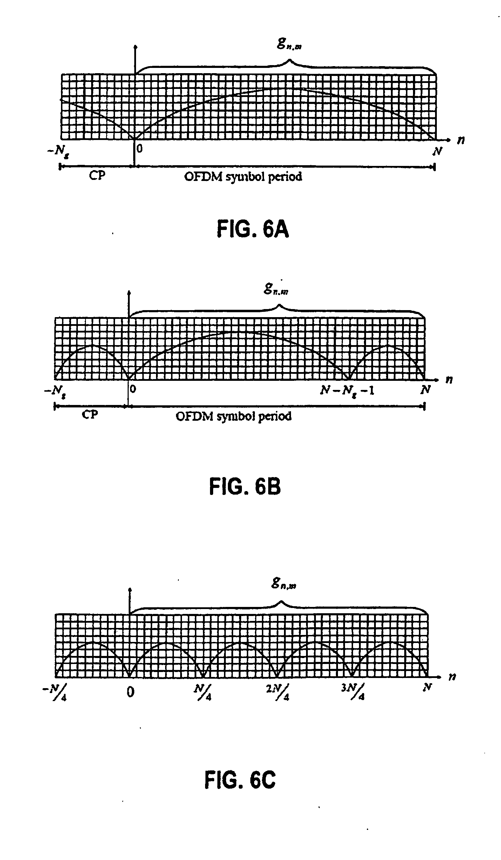

Fig. 6A shows an exemplary pulse shape or waveform of an OFDM signal without a cyclic prefix in the time domain. In Fig. 6A, the x-axis represents time and the y-axis represents the amplitude of the OFDM signal. The spectral side-lobes of the pulse $g_m$ is suppressed such that edges of side-lobe of the pulse are zeros, i.e., $g_{0,m} = g_{N,m} = 0$, for all $m = 0, 1, ..., M\text{-}1$.

Fig. 6B, which has the same x- and y-axis representations as in Fig. 6A, shows an exemplary pulse shape of an OFDM signal with an added cyclic prefix. Because the cyclic prefix is inserted, the waveform is discontinuous if $g_{N\text{-}Ng,m} \neq 0$. Therefore, to suppress side-lobes, the dispersive code is shaped such that the IFFT of the code has the property of $g_{0,m} = g_{N\text{-}N_g,m} = g_{N,m} = 0$, for all $m = 0, 1, ..., M\text{-}1$, as shown in Fig. 6B.

Fig. 6C, which has the same x- and y-axis representations as in Fig. 6A, shows a case in which the OFDM symbol duration is an integer multiple of the guard interval, e.g., $N/Ng = Q$ is an integer, and $\mathbf{g}_m$ is shaped as $Q$ repeated equal size waveforms. The duration of each waveform equals the duration of the cyclic prefix. By using the repeated equal size waveforms, implementation of the dispersive code may be significantly simplified. For example, the implementation of the dispersive code in the frequency domain may be carried out by generating $\underline{G}_m$ such that the encoder coefficients are separated by Q-1 zeros. For example, when $Q = 4$, the entries of $\underline{G}_m$ may be represented as:

$$\underline{G}_m = \begin{bmatrix} 0 & 0 & G_{2,4} & 0 & 0 & 0 & G_{6,4} & 0 & 0 & 0 & G_{10,4} & 0 & 0 & 0 & 0 & 0 \end{bmatrix}^T.$$

Other values, however, may also be assigned to $Q$.

The encoded OFDM signals, with or without added prefix, may be further combined with a carrier frequency and transmitted through a channel 430. For illustrative purposes, transmission characteristics of channel 430 may be represented by a channel impulse response $h(t)$ and additive white Gaussian noise (AWGN) $\nu(t)$.
The transmitted signals $y(t)$ may be further received by OFDM receiver 420.

After receiving the transmitted signals, OFDM receiver 420 provides the received signals to analog-to-discrete converter (ADC) 201 to convert received signals into discrete form. The converted discrete signals may be further provided to guard interval remover 202 to remove any added guard intervals or padded zeros. The received signals with cyclic prefix or padded zeros removed may be converted to parallel signals by serial-to-parallel converter 204 and may be further provided to N-point FFT unit 206.

FFT unit 206 may perform fast Fourier transform functions on the signals and may provide the transformed signals to dispersive decoder 422. The outputted signals from FFT unit 206 may be represented as equation (2). The transformed OFDM signals may be provided to dispersive decoder 422 for decoding operations, such as estimating the received information symbol.

Dispersive decoder 422 may include any appropriate decoder for decoding dispersively encoded OFDM signals. For example, dispersive decoder 422 may decode the encoded OFDM signals by applying a maximum-likelihood (ML) method, if prior information about $\underline{\mathbf{D}}_q$ is not known. The decoded signals may be represented by:

$$[\hat{D}_{qM+m}]_{m=0}^{M-1} = \arg \min_{[D_{qM+m}]_{m=0}^{M-1}} \left\| \underline{\mathbf{Y}}_q - \underline{\mathbf{H}}_q \underline{\mathbf{G}} \underline{\mathbf{D}}_q \right\|^2. \tag{7}$$

Other methods such as deduced-complexity algorithms, e.g., Viterbi algorithm, minimum mean squared error (MMSE) algorithm, zero forcing (ZF) algorithm, etc., may also be used.

Alternatively, OFDM system 400 may be configured to use iterative decoding as illustrated in Figs. 2 and 3. Other configurations, however, may also be used.

In certain embodiments, a dispersive encoder 112 may generate orthonormal dispersive codes to reduce inter-symbol interference as well as complexity of the corresponding decoder. Orthonormal dispersive codes may refer to dispersive codes that are normalized and orthogonal with one another or with a relative matrix. For example, the dispersive encoder may generate a set of $M$ orthonormal dispersive codes such that

$$\underline{\mathbf{G}}_m^H \underline{\mathbf{G}}_n = \begin{cases} 1, & m = n, \\ 0, & m \neq n. \end{cases}$$

where the superscript $H$ denotes complex conjugate transposition. Therefore, the orthonormal dispersive codes may have the property of $\underline{\mathbf{G}}^H \underline{\mathbf{G}} = \mathbf{I}$, which may cause inter-symbol interference among the dispersive codes being canceled.

In the above example, an estimate of the symbol may be obtained by a zero-forcing technique as:

$$\hat{\underline{\mathbf{D}}}_q = [\hat{D}_{qM}, \hat{D}_{qM+1}, \cdots, \hat{D}_{qM+M-1}]^T = \underline{\mathbf{G}}^H \underline{\mathbf{H}}_q^{-1} \underline{\mathbf{Y}}_q = \underline{\mathbf{D}}_q + \underline{\mathbf{G}}^H \underline{\mathbf{H}}_q^{-1} \underline{\mathbf{V}}_q \tag{8}$$

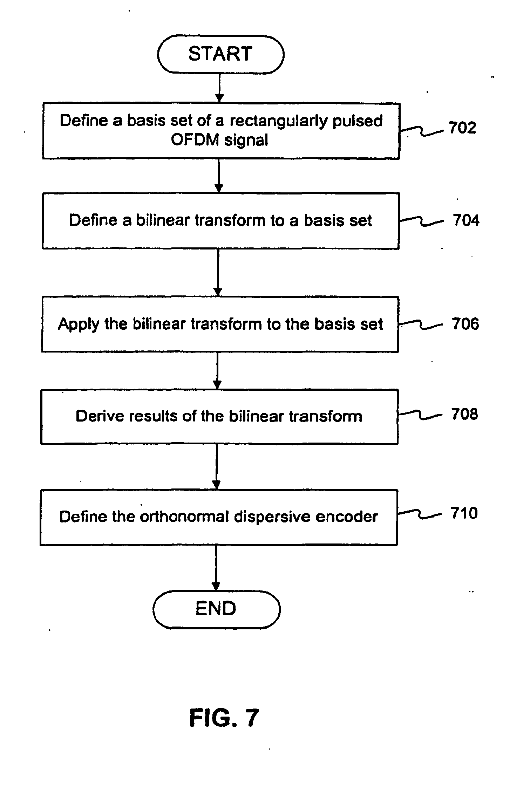

Also, edges of the IFFT of the dispersive codes may be zeros. Fig. 7 shows an exemplary code design process for constructing orthonormal dispersive codes consistent with embodiments of the invention. The design process may be performed by a computer or processor configured to design OFDM encoders, decoders, and/or related codes. The computer may include any appropriate type of computer system with a processor for performing various design processes.

As shown in Fig. 7, the computer may define a basis set of a rectangularly pulsed OFDM signal (step 702). For example, the computer may define the basis set of rectangularly pulsed OFDM signal as

$$\Psi = \left\{ C_n^{(0)}(t), S_n^{(0)}(t); n \in Z_N \right\} \tag{9}$$

where $Z_N$ denotes the set of integers $\{0, 1, ..., N - 1\}$; $t$ represents time; and $C_n^{(0)}(t)$ and $S_n^{(0)}(t)$ are quadrature

carriers defined by $C_n^{(m)}(t) = \sqrt{\frac{2}{T_d}} \cos\left((\omega_0 + \frac{1}{2} m\omega_d + n\omega_d)t\right)$ and

$S_n^{(m)}(t) = \sqrt{\frac{2}{T_d}} \sin\left((\omega_0 + \frac{1}{2} m\omega_d + n\omega_d)t\right)$, respectively, where $\omega_d = \frac{2\pi}{T_d}$ is the sub-carrier spacing.

Further, the computer may define a bilinear transform to a basis set $\{h_n(t); n = 0,1,..., N\text{-}1\}$ (step 704). The computer may define the bilinear transform as:

$$\{h_n(t); n \in Z_N\} \Rightarrow \left\{\tfrac{1}{2}(h_{2n}(t) \pm h_{2n+1}(t)); n \in Z_{\frac{N}{2}}\right\}. \tag{10}$$

Because the orthonormality is preserved with this transformation, the output of this transform may also be a basis set. Further, the computer may also define certain other parameters that may be used in the bilinear transformation operations.

For example, the computer may define the parameters $P_n^{(c)}(t) = \sqrt{2} \cos\left(\tfrac{1}{2} n\omega_d t\right)$, $P_n^{(s)}(t) = \sqrt{2} \sin\left(\tfrac{1}{2} n\omega_d t\right)$, $\zeta(u) = 2^{u-1}-1$, and $\chi(u) = N(1-2^{1-u})$, the implementation of which is further described below.

The computer may apply the bilinear transform to the basis set of rectangularly pulsed OFDM signal $\Psi$ (step 706). After applying the bilinear transform, the computer may derive results of the bilinear transform (step 708). For example, the computer may output the following sets of bases for the orthonormal dispersive codes:

$$\Phi_1^{(c)} = \left\{P_1^{(c)}(t)C_{2n}^{(1)}(t), \quad P_1^{(c)}(t)S_{2n}^{(1)}(t); \quad n \in Z_{N/2}\right\} \tag{11}$$

$$\Phi_u^{(c)} = \left\{P_1^{(s)}(t)\left(\prod_{k=1}^{u-2} P_{2^k}^{(c)}(t)\right)P_{2^{u-1}}^{(s)}(t)C_{n2^u+\zeta(u)}^{(1)}(t),\right.$$
$$\left. P_1^{(s)}(t)\left(\prod_{k=1}^{u-2} P_{2^k}^{(c)}(t)\right)P_{2^{u-1}}^{(s)}(t)S_{n2^u+\zeta(u)}^{(1)}(t); \quad n \in Z_{N/2^u}\right\}, \quad u = 2,3,\cdots,\log_2 N, \tag{12}$$

$$\Phi_u^{(d)} = \left\{P_1^{(s)}(t)\left(\prod_{k=1}^{u-1} P_{2^k}^{(c)}(t)\right)C_{n2^u+\zeta(u)}^{(1)}(t),\right.$$
$$\left. P_1^{(s)}(t)\left(\prod_{k=1}^{u-1} P_{2^k}^{(c)}(t)\right)S_{n2^u+\zeta(u)}^{(1)}(t); \quad n \in Z_{N/2^u}\right\}, \quad u = 2,3,\cdots,\log_2 N. \tag{13}$$

$$\Theta_u^{(c)} = \left\{P_{N/2^u}^{(s)}(t)\left(\prod_{k=1}^{u-1} P_{N/2^k}^{(c)}(t)\right)C_{n+\frac{1}{2}\chi(u+1)}^{(0)}(t),\right.$$
$$\left. P_{N/2^u}^{(s)}(t)\left(\prod_{k=1}^{u-1} P_{N/2^k}^{(c)}(t)\right)S_{n+\frac{1}{2}\chi(u+1)}^{(0)}(t); \quad n \in Z_{N/2^u}\right\}, \quad u = 1,2,\cdots,\log_2 N-1, \tag{14}$$

$$\Theta_{\log_2 N}^{(c)} = \left\{\prod_{k=1}^{\log_2 N} P_{N/2^k}^{(c)}(t)C_{n+\frac{1}{2}\chi(\log_2 N)}^{(1)}(t), \quad \prod_{k=1}^{\log_2 N} P_{N/2^k}^{(c)}(t)S_{n+\frac{1}{2}\chi(\log_2 N)}^{(1)}(t)\right\}, \tag{15}$$

$$\Theta_u^{(d)} = \left\{ \prod_{k=1}^{u} P_{N/2^k}^{(c)}(t) C_{n+\frac{1}{2}\chi(u+1)}^{(0)}(t), \quad \prod_{k=1}^{u} P_{N/2^k}^{(c)}(t) S_{n+\frac{1}{2}\chi(u+1)}^{(0)}(t); \quad n \in Z_{N/2^u} \right\}, \tag{16}$$
$$u = 1, 2, \cdots, \log_2 N - 1,$$

$$\Theta_{\log_2 N}^{(d)} = \left\{ P_1^{(s)}(t) \left( \prod_{k=1}^{\log_2 N - 1} P_{N/2^k}^{(c)}(t) \right) C_{\frac{1}{2}\chi(\log_2 N)}^{(1)}(t), \right.$$
$$\left. P_1^{(s)}(t) \left( \prod_{k=1}^{\log_2 N - 1} P_{N/2^k}^{(c)}(t) \right) S_{\frac{1}{2}\chi(\log_2 N)}^{(1)}(t) \right\}. \tag{17}$$

where $L \in \{1, 2, \cdots, \log_2 N\}$. The computer may also output $W_L = \bigcup_{u=1}^{L} \Phi_u^{(c)}$ as a basis set containing zero-edged continuous basis signals on $0 \le t \le T_d$; and $V_L = \bigcup_{u=1}^{L} \Theta_u^{(c)}$ as a basis set containing zero-edged continuous basis signals on $-T_d/2^q \le t \le T_d$, where q is a non-negative integer. As explained above, zero-edged signals may refer to signals with their spectral side-lobes suppressed such that edges of the side-lobes of the signals or the pulses of the signals are zero. Further, basis signals, as used herein, may represent signals used to construct certain dispersive encoders.

Further, the computer may also derive and output alternative expressions for $\Phi_u^{(c)}$ and $\Theta_u^{(c)}$ as:

$$\Phi_u^{(c)} = \left\{ 2^{-\frac{u}{2}} \sum_{v=0}^{2^u-1} (-1)^{1+\psi_{u,v}} C_{n2^u+v}^{(0)}(t), \quad 2^{-\frac{u}{2}} \sum_{v=0}^{2^u-1} (-1)^{1+\psi_{u,v}} S_{n2^u+v}^{(0)}(t); \quad n \in Z_{N/2^u} \right\}, \tag{18}$$

$$\Theta_u^{(c)} = \left\{ 2^{-\frac{u}{2}} \sum_{v=0}^{2^u-1} \phi_{u,v} C_{n+\frac{N}{2^u}v}^{(0)}(t), \quad 2^{-\frac{u}{2}} \sum_{v=0}^{2^u-1} \phi_{u,v} S_{n+\frac{N}{2^u}v}^{(0)}(t); \quad n \in Z_{N/2^u} \right\}. \tag{19}$$

where $\psi_{u,v}$ is the sum of most and least significant bits in the binary representation (in u bits) of the modulo-$2^u$ value of v when $u \ge 2$ and $\psi_{u,v} = 1$ by default; and $\phi_{u,v} = 1$ if $u = \log_2 n$ and $\phi_{u,v} = (-1)^{\zeta v}$ otherwise, where $\zeta_v$ represents the least significant bit in the binary representation of v.

After deriving the basis set and other parameters, the computer may define the orthonormal dispersive encoder for construction of continuous-phase cyclic prefix OFDM signals (step 710). For example, the computer may define coefficients of a dispersive encoder in the form of:

$$G_{n+\frac{N}{2^u}v,\chi(u)+n}^{(V)} = 2^{\frac{-u}{2}} \phi_{u,v} \tag{20}$$

for $V_L$-based dispersive code, where $n \in Z_{\frac{N}{2^u}}$, $v \in Z_{2^u}$, for $u \in \{1, 2, \cdots, L\}$; and

$$G_{n2^u+v,\chi(u)+n}^{(W)} = 2^{\frac{-u}{2}} (-1)^{1+\psi_{u,v}} \tag{21}$$

for $W_L$ -based dispersive code, where $n \in Z_{\frac{N}{2^u}}$ , $v \in Z_{2^u}$ , for $u \in \{1, 2, \cdots, L\}$. More particularly, in an example of a $V_3$ -based dispersive code with $N = 8$, the dispersive encoder coefficient may be determined as:

$$\underline{G} = \begin{bmatrix} 1/\sqrt{2} & 0 & 0 & 0 & 1/2 & 0 & 1/\sqrt{8} \\ 0 & 1/\sqrt{2} & 0 & 0 & 0 & 1/2 & -1/\sqrt{8} \\ 0 & 0 & 1/\sqrt{2} & 0 & -1/2 & 0 & 1/\sqrt{8} \\ 0 & 0 & 0 & 1/\sqrt{2} & 0 & -1/2 & -1/\sqrt{8} \\ -1/\sqrt{2} & 0 & 0 & 0 & 1/2 & 0 & 1/\sqrt{8} \\ 0 & -1/\sqrt{2} & 0 & 0 & 0 & 1/2 & -1/\sqrt{8} \\ 0 & 0 & -1/\sqrt{2} & 0 & -1/2 & 0 & 1/\sqrt{8} \\ 0 & 0 & 0 & -1/\sqrt{2} & 0 & -1/2 & -1/\sqrt{8} \end{bmatrix} .$$

After the dispersive encoder is defined, the defined dispersive encoder may be used for decoding operations illustrated in previous sections.

**Claims**

1.  An orthogonal frequency division multiplexing, OFDM, system (400), comprising:

    an OFDM transmitter (410) configured to transmit OFDM signals through a communication channel (430), the OFDM transmitter (410) comprising:

      a channel encoder (104) configured to encode a plurality of information bits;
      an interleaver (106) configured to interleave the channel-encoded information bits;
      a mapper (108) configured to map the interleaved channel-encoded information bits into mapped multi-level symbols; and
      a dispersive encoder (112) configured to dispersively encode the mapped symbols; and

    an OFDM receiver (420) configured to receive the transmitted OFDM signals and to iteratively decode the received OFDM signals based on a soft decision method;
    **characterized in that** the dispersive encoder (112) is constructed by:

    defining a first basis set of a rectangularly-pulsed OFDM signal as $\{h_n(t); n = 0,1, ..., N-1\}$ wherein $\{h_n(t); n = 0,1, ..., N-1\}$ are orthonormal basis functions, and t denotes time;

    defining a bilinear transform as $\left\{ h_n(t); n \in Z_N \right\} \Rightarrow \left\{ \frac{1}{2}\left( h_{2n}(t) \pm h_{2n+1}(t) \right); n \in Z_{\frac{N}{2}} \right\}$ where $Z_N$ denotes the set of integers $\{0,1, ...,N-1\}$
    applying the bilinear transform to the first basis set of rectangularly-pulsed OFDM signal to obtain a second basis set containing zero-edged continuous basis signals; and
    constructing the dispersive encoder based on the second basis set such that a spectrum of the dispersively encoded OFDM signal falls off faster than that of a squared sinc function.

2.  The OFDM system (400) according to claim 1, wherein the OFDM transmitter (410) further includes:

    an N-point inverse fast Fourier transform, IFFT, device (114) coupled to the dispersive encoder (112) and configured to modulate the dispersively encoded symbols with a plurality of sub-carriers; and

a parallel-to-serial converter (116) to convert outputs from the N-point IFFT device (114) to an OFDM signal sequence.

3. The OFDM system (400) according to claim 2, wherein the OFDM transmitter (410) further include a guard interval adder (118) configured to add a predetermined number of samples of the OFDM signal sequence to the OFDM signal sequence as a cyclic prefix.

4. The OFDM system according to claim 2 or 3, wherein the OFDM receiver (420) includes an N-point fast Fourier transform, FFT, device (206) configured to demodulate the received OFDM signals with the plurality of sub-carriers.

5. The OFDM system (400) according to claim 4, wherein the OFDM receiver (420) further includes a turbo equalizer (210) configured to perform joint channel equalization and decoding of the FFT-transformed OFDM signals, the turbo equalizer (210) comprising:

a soft equalizer (212) configured to process the FFT-transformed OFDM signals to produce a first soft estimate;
a de-interleaver (304) configured to de-interleave a first extrinsic information generated based on the first soft estimate;
a soft decoder (214) configured to process the de-interleaved first extrinsic information to produce a second soft estimate for combining with the de-interleaved first extrinsic information to form second extrinsic information; and
an interleaver (302) to interleave the second extrinsic information generated.

6. The OFDM system (400) according to claim 5, wherein the soft equalizer (212) and the soft decoder (214) exchange the first soft estimate and the second soft estimate iteratively, and the soft decoder (214) generates a desired soft estimate after a pre-determined number of iterations.

7. The OFDM system (400) according to claim 6, wherein the OFDM receiver (420) further includes a decision device (216) configured to determine an information bit of the received OFDM signals based on the desired soft estimate.

8. The OFDM system (400) according to claim 7, wherein the OFDM receiver (420) further includes a sink device (218) coupled to the decision device (216) and configured to process the determined information bit.

9. An orthogonal frequency division multiplexing, OFDM, transmitter (100), comprising:

a channel encoder (104) configured to encode a plurality of information bits; an interleaver (106) configured to interleave the channel-encoded information bits;
a mapper (108) configured to map the interleaved channel-encoded information bits into mapped multi-level symbols; and
a dispersive encoder (112) configured to dispersively encode the mapped symbols;

**characterized in that** the dispersive encoder (112) is constructed by:

defining a first basis set of a rectangularly-pulsed OFDM signal as $\{h_n(t); n = 0, 1, ..., N - 1\}$, wherein $\{h_n(t); n = 0, 1, ..., N - 1\}$ are orthonormal basis functions and t denotes time;

defining a bilinear transform as $\left\{ h_n(t); n \in Z_N \right\} \Rightarrow \left\{ \frac{1}{2} \left( h_{2n}(t) \pm h_{2n+1}(t) \right); n \in Z_{\frac{N}{2}} \right\}$,

where $Z_N$ denotes the set of integers $\{0, 1, ..., N-1\}$;
applying the bilinear transform to the first basis set of rectangularly-pulsed OFDM signal to obtain a second basis set containing zero-edged continuous basis signals; and
constructing the dispersive encoder based on the second basis set, such that a spectrum of the dispersively encoded OFDM signal falls off faster than that of a squared sinc function.

10. The OFDM transmitter (100) according to claim 9, wherein the dispersive encoder (112) encodes each of the plurality of symbols with a separate sub-carrier.

11. The OFDM transmitter (100) according to claim 9, wherein the dispersive encoder (112) encodes a group of symbols from the plurality of symbols with a predetermined group of sub-carriers.

**12.** The OFDM transmitter (100) according to claim 9, 10 or 11 further including: a guard interval adder (118) configured to add a predetermined number of padding zeros to the OFDM signal.

**13.** The OFDM transmitter (100) according to claim 9, 10 or 11 further including: a guard interval adder (118) configured to add a predetermined number of samples of the OFDM signal to the OFDM signal as a cyclic prefix.

**14.** The OFDM transmitter (100) according to claim 12, wherein the OFDM signal has two lobes and edges of the two lobes are zeros.

**15.** The OFDM transmitter (100) according to claim 13, wherein the OFDM signal has at least two lobes and the cyclic prefix of the OFDM signal has at least two lobes, and edges of all of the lobes are zeros.

**16.** The OFDM transmitter (100) according to any one of claims 9 to 15, wherein the dispersive encoder (112) uses orthonormal dispersive codes.

**17.** A method for orthogonal frequency division multiplexing, OFDM, transmission, the method comprising:

channel encoding a plurality of information bits;
interleaving the channel-encoded information bits;
mapping the interleaved channel-encoded information bits into mapped multi-level symbols; and
dispersively encoding the mapped symbols;
**characterised in that** the dispersive encoding is constructed by:

defining a basis set of a rectangularly pulsed OFDM signal as $\{h_n(t); n = 0,1,\cdots, N\text{-}1\}$, wherein $\{h_n(t); n = 0,1, ..., N\text{-}1$ are orthonormal basis functions, and t denotes time;

defining a bilinear transform as $\left\{ h_n(t); n \in Z_N \right\} \Rightarrow \left\{ \frac{1}{2}\left( h_{2n}(t) \pm h_{2n+1}(t) \right); n \in Z_{\frac{N}{2}} \right\}$, wherein $Z_N$ denotes the set of integers $\{0, 1, ..., N\text{-}1\}$; and
applying the bilinear transform to the basis set of rectangularly pulsed OFDM signal to obtain a second basis set containing zero-edged continuous basis signals; and
constructing the dispersive encoder based on the second basis set such that a spectrum of the dispersively encoded OFDM signal falls off faster than that of a squared sinc function.

**18.** The method according to claim 17, wherein defining the basis set further includes:

providing that $Z_N$ denotes a set of integers $\{0, 1, ..., N\text{-}1\}$, t represents time, and $C_n^{(0)}(t)$ and $S_n^{(0)}(t)$ are quadrature carriers of the OFDM dispersive encoder, and

defining the basis set of rectangularly pulsed OFDM signal as $\Psi = \left\{ C_n^{(0)}(t), S_n^{(0)}(t); n \in Z_N \right\}$.

**19.** The method according to claim 17 or 18 further including:

defining the dispersive encoder (112) such that it contains orthonormal dispersive codes.

**Patentansprüche**

**1.** System (400) für ein orthogonales Frequenzteilungsmultiplex-Verfahren, OFDM, umfassend:

einen OFDM-Sender (410), welcher ausgestaltet ist, OFDM-Signale über einen Kommunikationskanal (430) zu übertragen,
wobei der OFDM-Sender (410) umfasst:

einen Kanal-Encoder (104), welcher ausgestaltet ist, mehrere Informationsbits zu kodieren,
eine Verschachtelungsvorrichtung (106), welche ausgestaltet ist, die kanalkodierten Informationsbits zu verschachteln,
eine Abbildungsvorrichtung (108), welche ausgestaltet ist, die verschachtelten kanalkodierten Informationsbits auf abgebildete Mehrfach-Pegel-Symbole abzubilden, und
einen Dispersions-Encoder (112), welcher ausgestaltet ist, die abgebildeten Symbole dispergierend zu kodieren, und einen OFDM-Empfänger (420), welcher ausgestaltet ist, die gesendeten OFDM-Signale zu empfangen und die empfangenen OFDM-Signale auf der Grundlage eines Soft-Entscheidungsverfahrens iterativ zu dekodieren;
**dadurch gekennzeichnet, dass** der Dispersions-Encoder (112) hergestellt wird durch:
Definieren einer ersten Basismenge eines rechteckig gepulsten OFDM-Signals als {$h_n(t)$ ; n=0,1, ..., N-1}, wobei {$h_n(t)$ ; n=0,1, ..., N-1} orthonormale Basisfunktionen sind und t die Zeit bezeichnet;
Definieren einer bilinearen Transformation als

$$\{h_n(t) ; n \in Z_N\} \Rightarrow \left\{ \frac{1}{2}(h_{2n}(t) \pm h_{2n+1}(t)); n \in Z_{\frac{N}{2}} \right\},$$

wobei $Z_N$ die Menge von Ganzzahlen {0, 1, ..., N-1} bezeichnet;
Anwenden der bilinearen Transformation auf die erste Basismenge des rechteckig gepulsten OFDM-Signals, um eine zweite Basismenge zu erhalten, welche nullberandete durchgängige Basissignale enthält; und
Herstellen des Dispersions-Encoders auf der Grundlage der zweiten Basismenge derart, dass ein Spektrum des dispergierend kodierten OFDM-Signals schneller abfällt als das einer quadrierten sinc-Funktion.

2. OFDM-System (400) nach Anspruch 1, wobei der OFDM-Sender (410) ferner aufweist:

eine Vorrichtung (114) für eine N-Punkt inverse schnelle Fourier-Transformation, IFFT, welche mit dem Dispersions-Encoder (112) gekoppelt ist und ausgestaltet ist, die dispergierend kodierten Symbole mit mehreren Unterträgern zu modulieren; und
einen Parallel-Seriellwandler (116), um Ausgaben von der N-Punkt IFFT-Vorrichtung (114) in eine OFDM-Signalsequenz zu wandeln.

3. OFDM-System (400) nach Anspruch 2, wobei der OFDM-Sender (410) ferner einen Schutzintervall-Addierer (118) aufweist, welcher ausgestaltet ist, eine vorbestimmte Anzahl von Abtastwerten der OFDM-Signalsequenz zu der OFDM-Signalsequenz als einen zyklischen Vorsatz zu addieren.

4. OFDM-System nach Anspruch 2 oder 3, wobei der OFDM-Empfänger (420) eine Vorrichtung (206) für eine N-Punkt schnelle Fourier-Transformation, FFT, aufweist, welche ausgestaltet ist, die empfangenen OFDM-Signale mit den mehreren Unterträgern zu demodulieren.

5. OFDM-System (400) nach Anspruch 4, wobei der OFDM-Empfänger (420) ferner einen Turbo-Equalizer (210) aufweist, welcher ausgestaltet ist, einen verbunden Kanalabgleich und ein Dekodieren der FFT-transformierten OFDM-Signale auszuführen, wobei der Turbo-Equalizer (210) umfasst:

einen Soft-Equalizer (212), welcher ausgestaltet ist, die FFT-transformierten OFDM-Signale zu verarbeiten, um eine erste Soft-Abschätzung zu erzeugen;
eine Entschachtelungsvorrichtung (304), welche ausgestaltet ist, eine basierend auf der ersten Soft-Abschätzung erzeugte erste extrinsische Information zu entschachteln;
einen Soft-Decoder (214), welcher ausgestaltet ist, die entschachtelte erste extrinsische Information zu verarbeiten, um eine zweite Soft-Abschätzung für ein Kombinieren mit der entschachtelten ersten extrinsischen Information zu erzeugen, um eine zweite extrinsische Information auszubilden; und
eine Verschachtelungsvorrichtung (302), um die erzeugte zweite extrinsische Information zu verschachteln.

6. OFDM-System (400) nach Anspruch 5, wobei der Soft-Equalizer (212) und der Soft-Decoder (214) die erste Soft-Abschätzung und die zweite Soft-Abschätzung iterativ austauschen, und wobei der Soft-Decoder (214) eine gewünschte Soft-Abschätzung nach einer vorbestimmten Anzahl von Iterationen erzeugt.

7. OFDM-System (400) nach Anspruch 6, wobei der OFDM-Empfänger (420) ferner eine Entscheidungsvorrichtung (216) aufweist, welche ausgestaltet ist, ein Informationsbit der empfangenen OFDM-Signale auf der Grundlage der gewünschten Soft-Abschätzung zu bestimmen.

8. OFDM-System (400) nach Anspruch 7, wobei der OFDM-Empfänger (420) ferner eine Senkvorrichtung (218) aufweist, welcher mit der Entscheidungsvorrichtung (216) gekoppelt ist und ausgestaltet ist, das bestimmte Informationsbit zu verarbeiten.

9. Sender (100) für ein orthogonales Frequenzteilungsmultiplex-Verfahren, OFDM, umfassend:

einen Kanal-Encoder (104), welcher ausgestaltet ist, mehrere Informationsbits zu kodieren;
eine Verschachtelungsvorrichtung (106), welche ausgestaltet ist, die kanalkodierten Informationsbits zu verschachteln;
eine Abbildungsvorrichtung (108), welche ausgestaltet ist, die verschachtelten kanalkodierten Informationsbits auf abgebildete Mehrfach-Pegel-Symbole abzubilden; und
einen Dispersions-Encoder (112), welcher ausgestaltet ist, die abgebildeten Symbole dispergierend zu kodieren; **dadurch gekennzeichnet, dass** der Dispersions-Encoder (112) hergestellt wird durch:
Definieren einer ersten Basismenge eines rechteckig gepulsten OFDM-Signals als $\{h_n(t) ; n=0, 1, ...N-1\}$, wobei $\{h_n(t) ; n=0,1, ...,N-1\}$ orthonormale Basisfunktionen sind und t die Zeit bezeichnet;
Definieren einer bilinearen Transformation als

$$\{h_n(t) ; n \in Z_N\} \quad => \quad \left\{\frac{1}{2}(h_{2n}(t) \pm h_{2n+1}(t)); n \in Z_{\frac{N}{2}}\right\},$$

wobei $Z_N$ die Menge von Ganzzahlen $\{0, 1, ..., N-1\}$ bezeichnet;
Anwenden der bilinearen Transformation auf die erste Basismenge von rechteckig gepulsten OFDM-Signalen, um eine zweite Basismenge zu erhalten, welche nullberandete durchgängige Basissignale enthält; und
Herstellen des Dispersions-Encoders auf der Grundlage der zweiten Basismenge derart, dass ein Spektrum des dispergierend kodierten OFDM-Signals schneller abfällt als das einer quadrierten sinc-Funktion.

10. OFDM-Sender (100) nach Anspruch 9, wobei der Dispersions-Encoder (112) jedes der mehreren Symbole mit einem separaten Unterträger kodiert.

11. OFDM-Sender (100) nach Anspruch 9, wobei der Dispersions-Encoder (112) eine Gruppe von Symbolen von den mehreren Symbolen mit einer vorbestimmten Gruppe von Unterträgern kodiert.

12. OFDM-Sender(100) nach Anspruch 9, 10 oder 11, ferner umfassend: einen Schutzintervall-Addierer (118), welcher ausgestaltet ist, eine vorbestimmte Anzahl von Füllnullen zu dem OFDM-Signal zu addieren.

13. OFDM-Sender (100) nach Anspruch 9, 10 oder 11, ferner umfassend: einen Schutzintervall-Addierer (118), welcher ausgestaltet ist, eine vorbestimmte Anzahl von Abtastwerten des OFDM-Signals zu dem OFDM-Signal als einen zyklischen Vorsatz zu addieren.

14. OFDM-Sender (100) nach Anspruch 12, wobei das OFDM-Signal zwei Bäuche aufweist und Ränder der zwei Bäuche Nullen sind.

15. OFDM-Sender (100) nach Anspruch 13, wobei das OFDM-Signal mindestens zwei Bäuche aufweist und der zyklische Vorsatz des OFDM-Signals mindestens zwei Bäuche aufweist und Ränder von allen Bäuchen Nullen sind.

16. OFDM-Sender (100) nach einem der Ansprüche 9 bis 15, wobei der Dispersions-Encoder (112) orthonormale dispergierende Codes verwendet.

**17.** Verfahren für eine orthogonale Frequenzteilungsmultiplex-Übertragung, OFDM, wobei das Verfahren umfasst:

Kanalkodieren von mehreren Informationsbits;
Verschachteln der kanalkodierten Informationsbits;
Abbilden der verschachtelten kanalkodierten Informationsbits auf abgebildete Mehrfach-Pegel-Symbole; und
dispergierendes Kodieren der abgebildeten Symbole;

**dadurch gekennzeichnet, dass** das dispergierende Kodieren hergestellt wird durch:

Definieren einer Basismenge eines rechteckig gepulsten OFDM-Signals als {$h_n$(t) ; n=0,1,...,N-1}, wobei {$h_n$(t) ; n=0,1,...,N-1} orthonormale Basisfunktionen sind und t die Zeit bezeichnet;
Definieren einer bilinearen Transformation als

$$\{ \mathrm{h_n(t)} ; n \in Z_N \} \;\; => \;\; \left\{ \frac{1}{2}(h_{2n}(t) \pm h_{2n+1}(t)); n \in Z_{\frac{N}{2}} \right\},$$

wobei $Z_N$ die Menge von Ganzzahlen {0, 1, ..., N-1} bezeichnet; und
Anwenden der bilinearen Transformation auf die Basismenge des rechteckig gepulsten OFDM-Signals, um eine zweite Basismenge zu erhalten, welche nullberandete durchgängige Basissignale enthält; und
Herstellen des Dispersions-Encoders auf der Grundlage der zweiten Basismenge derart, dass ein Spektrum des dispergierend kodierten OFDM-Signals schneller abfällt als das einer quadrierten sinc-Funktion.

**18.** Verfahren nach Anspruch 17, wobei das Definieren der Basismenge ferner aufweist:

Erbringen, dass $Z_N$ eine Menge von Ganzzahlen {0,1,...,N-1} bezeichnet, t die Zeit darstellt, und $C_n^{(0)}(t)$ und $S_n^{(0)}(t)$ Quadraturträger des OFDM-Dispersions-Encoders sind, und
Definieren der Basismenge des rechteckig gepulsten OFDM-Signals als

$$\Psi = \left\{ C_n^{(0)}(t), S_n^{(0)}(t); n \in Z_N \right\}.$$

**19.** Verfahren nach Anspruch 17 oder 18, ferner umfassend:

Definieren des Dispersions-Encoders (112) derart, dass er orthonormale Dispersionscodes enthält.

**Revendications**

**1.** Système (400) de multiplexage par répartition orthogonale de la fréquence, OFDM, comportant :

un émetteur OFDM (410) conçu pour émettre des signaux OFDM par l'intermédiaire d'un canal de communication (430), l'émetteur OFDM (410) comprenant :

un codeur (104) de canal conçu pour coder une pluralité de bits d'information ;
un entrelaceur (106) conçu pour entrelacer les bits d'information à codage de canal ;
un mappeur (108) conçu pour convertir les bits d'information entrelacés à codage de canal en symboles multi-niveaux mappés ; et
un codeur dispersif (112) conçu pour appliquer un codage dispersif aux symboles mappés ; et
un récepteur OFDM (420) conçu pour recevoir les signaux OFDM émis et pour appliquer, suivant un procédé de prise de décision pondérée, un décodage itératif aux signaux OFDM reçus ;
**caractérisé en ce que** le codeur dispersif (112) est construit en :

définissant un premier ensemble de base d'un signal OFDM à impulsions rectangulaires, sous la forme $\{h_n(t) ; n = 0, 1, ..., N - 1\}$ où $\{h_n(t) ; n = 0, 1, ..., N\text{-}1\}$ sont des fonctions à base orthonormée, et $t$ désigne le temps ;

définissant une transformée bilinéaire, sous la forme $\{h_n(t) ; n \in Z_n\} \Rightarrow$

$$\left\{ \frac{1}{2} \big[(h)_{2n}(t) \pm h_{2n+1}(t)\big] ; n \in Z_{\frac{N}{2}} \right\},$$

où $Z_N$ désigne l'ensemble d'entiers $\{0, 1, ... , N\text{-}1\}$ ;

appliquant la transformée bilinéaire au premier ensemble de base du signal OFDM à impulsions rectangulaires pour obtenir un second ensemble de base contenant des signaux de base continus à front nul ; et

construisant le codeur dispersif d'après le second ensemble de base de façon qu'un spectre du signal OFDM à codage dispersif s'affaiblisse plus vite que celui d'une fonction de synchronisation carrée.

2. Système OFDM (400) selon la revendication 1, dans lequel l'émetteur OFDM (410) comporte en outre :

un dispositif (114) de transformation de Fourier rapide inverse, TFRI, à N points, couplé au codeur dispersif (112) et conçu pour moduler les symboles à codage dispersif avec une pluralité de sous-porteuses ; et

un convertisseur parallèle-série (116) pour convertir en suite de signaux OFDM les signaux de sortie du dispositif de TFRI (114) à N points.

3. Système OFDM (400) selon la revendication 2, dans lequel l'émetteur OFDM (410) comprend en outre un additionneur (118) d'intervalles de garde conçu pour ajouter, sous la forme d'un préfixe cyclique, un nombre prédéterminé d'échantillons de la suite de signaux OFDM à la suite de signaux OFDM.

4. Système OFDM selon la revendication 2 ou 3, dans lequel le récepteur OFDM (420) comporte un dispositif (206) de transformation de Fourier rapide inverse, TFRI, à N points, conçu pour démoduler les signaux OFDM reçus avec la pluralité de sous-porteuses.

5. Système OFDM (400) selon la revendication 4, dans lequel le récepteur OFDM (420) comprend en outre un turbo-égaliseur (210) conçu pour effectuer conjointement une égalisation sur le canal et un décodage des signaux OFDM à transformation TFRI, le turbo-égaliseur (210) comprenant :

un égaliseur pondéré (212) conçu pour traiter les signaux OFDM à transformation TFRI afin de produire une première estimation pondérée ;

un désentrelaceur (304) conçu pour désentrelacer une première information extrinsèque produite d'après la première estimation pondérée ;

un décodeur pondéré (214) conçu pour traiter la première information extrinsèque désentrelacée afin de produire une seconde estimation pondérée à combiner avec la première information extrinsèque désentrelacée dans le but de former une seconde information extrinsèque ; et

un entrelaceur (302) pour entrelacer la seconde information extrinsèque produite.

6. Système OFDM (400) selon la revendication 5, dans lequel l'égaliseur pondéré (212) et le décodeur pondéré (214) échangent d'une façon itérative la première estimation pondérée et la seconde estimation pondérée et, après un nombre prédéterminé d'itérations, le décodeur pondéré (214) produit une estimation pondérée voulue.

7. Système OFDM (400) selon la revendication 5, dans lequel le récepteur OFDM (420) comprend en outre un dispositif de prise de décision (216) conçu pour déterminer, d'après l'estimation pondérée voulue, un bit d'information des signaux OFDM reçus.

8. Système OFDM (400) selon la revendication 7, dans lequel le récepteur OFDM (420) comprend en outre un dispositif collecteur (218) couplé au dispositif de prise de décision (216) et conçu pour traiter le bit d'information déterminé.

9. Emetteur (100) à multiplexage par répartition orthogonale de la fréquence OFDM, comportant :

un codeur (104) de canal conçu pour coder une pluralité de bits d'information ;

un entrelaceur (106) conçu pour entrelacer les bits d'information à codage de canal ;

un mappeur (108) conçu pour convertir les bits d'information entrelacés à codage de canal en symboles multi-niveaux mappés ; et
un codeur dispersif (112) conçu pour appliquer un codage dispersif aux symboles mappés ;

**caractérisé en ce que** le codeur dispersif (112) est construit en :

définissant un premier ensemble de base d'un signal OFDM à impulsions rectangulaires, sous la forme $\{h_n(t)$ ; $n = 0, 1, ..., N - 1\}$ où $\{h_n(t)$ ; $n = 0, 1, ..., N - 1\}$ sont des fonctions à base orthonormée, et $t$ désigne le temps ;
définissant une transformée bilinéaire, sous la forme $\{h_n(t)$ ; $n \in Z_n\} \Rightarrow$

$$\left\{ \frac{1}{2} [(h]_{2n}(t) \pm h_{2n+1}(t)) ; \; n \in Z_{\frac{N}{2}} \right\},$$

où $Z_N$ désigne l'ensemble d'entiers $\{0, 1, ... , N-1\}$ ;
appliquant la transformée bilinéaire au premier ensemble de base du signal OFDM à impulsions rectangulaires pour obtenir un second ensemble de base contenant des signaux de base continus à front nul ; et
construisant le codeur dispersif d'après le second ensemble de base de façon qu'un spectre du signal OFDM à codage dispersif s'affaiblisse plus vite que celui d'une fonction de synchronisation carrée.

10. Emetteur OFDM (100) selon la revendication 9, dans lequel le codeur dispersif (112) code chacun des différents symboles avec une sous-porteuse séparée.

11. Emetteur OFDM (100) selon la revendication 9, dans lequel le codeur dispersif (112) code un groupe de symboles parmi la pluralité de symboles avec un groupe prédéterminé de sous-porteuses.

12. Emetteur OFDM (100) selon la revendication 99, 10 ou 11, comportant en outre : un additionneur (118) d'intervalles de garde conçu pour ajouter un nombre prédéterminé de zéros de remplissage au signal OFDM.

13. Emetteur OFDM (100) selon la revendication 9, 10 ou 11, comportant en outre : un additionneur (118) d'intervalles de garde conçu pour ajouter, sous la forme d'un préfixe cyclique, un nombre prédéterminé d'échantillons du signal OFDM au signal OFDM.

14. Emetteur OFDM (100) selon la revendication 12, dans lequel le signal OFDM a deux lobes et les fronts de tous les lobes sont nuls.

15. Emetteur OFDM (100) selon la revendication 13, dans lequel le signal OFDM a au moins deux lobes et le préfixe cyclique du signal OFDM a au moins deux lobes, et les fronts de tous les lobes sont nuls.

16. Emetteur OFDM (100) selon l'une quelconque des revendications 9 à 15, dans lequel le codeur dispersif (112) utilise des codes dispersifs orthonormés.

17. Procédé pour émission à multiplexage par répartition orthogonale de la fréquence OFDM, le procédé comportant :

un codage de canal pour une pluralité de bits d'information ;
un entrelacement des bits d'information à codage de canal ;
un mappage pour convertir les bits d'information entrelacés à codage de canal en symboles multi-niveaux mappés ; et
un codage dispersif des symboles mappés ;

**caractérisé en ce que** le codage dispersif est construit en :

définissant un ensemble de base d'un signal OFDM à impulsions rectangulaires, sous la forme $\{h_n(t)$ ; $n = 0, 1, ... , N-1\}$ où $\{h_n(t)$ ; $n = 0, 1, ... , N-1\}$ sont des fonctions à base orthonormée, et $t$ désigne le temps ;

$$\left\{ \frac{1}{2} [(h]_{2n}(t) \pm h_{2n+1}(t)) ; \; n \in Z_{\frac{N}{2}} \right\},$$

forme $\{h_n(t)$ ; $n \in Z_n\} \Rightarrow \{h_n(t)$ ; $n \in Z_n\} \Rightarrow$
où $Z_N$ désigne l'ensemble d'entiers $\{0, 1, ... , N-1\}$ ;

appliquant la transformée bilinéaire à l'ensemble de base du signal OFDM à impulsions rectangulaires pour obtenir un second ensemble de base contenant des signaux de base continus à front nul ; et

construisant le codeur dispersif d'après le second ensemble de base de façon qu'un spectre du signal OFDM à codage dispersif s'affaiblisse plus vite que celui d'une fonction de synchronisation carrée.

**18.** Procédé selon la revendication 17, dans lequel la définition de l'ensemble de base comprend en outre :

des dispositions pour que $Z_N$ désigne un ensemble d'entiers $\{0, 1, ..., N\text{-}1\}$, que t représente le temps et que $C_n^0\,(t)$ et $S_n^0\,(t)$ soient des porteuses en quadrature du codeur dispersif OFDM, et

la définition de l'ensemble de base du signal OFDM à impulsions rectangulaires sous la forme $\Psi = \{C_n^{(0)}(t), S_n^0(t); n \in Z_N\}$.

**19.** Procédé selon la revendication 17 ou 18, comportant en outre :

la définition du codeur dispersif (112) de façon qu'il contienne des codes dispersifs orthonormés.

100

| Signal Source 102 | $a_i$ | Channel Encoder 104 | $b_k$ | Interleaver 106 | $c_k$ | Mapper 108 | $D_n$ |

| S/P 110 | M | Dispersive Encoder 112 | $X_n$ N | N-Point IFFT unit 114 | P/S 116 | Guard Interval Adder 118 | DAC 120 |

**FIG. 1**

200

| ADC 201 | | Guard Interval Remover 202 | | S/P 204 | | N-Point FFT Unit 206 | | P/S 208 |

$Y_n$

$\underline{Y_q}$

| Soft Equalizer 212 | Soft Decoder 214 |

210

$L(a_l)$

| Decision Device 216 |

$\hat{a}_l$

| Sink Device 218 |

FIG. 2

300

**FIG. 3**

400

FIG. 4

Dispersive Encoder 112 → $X_{0,m}$, $X_{1,m}$, $X_{N-1,m}$ → IFFT 114 → $X_{0,m}$, $X_{1,m}$, $X_{n-1,m}$

$D_m$ →

**FIG. 5**

**FIG. 6A**

**FIG. 6B**

**FIG. 6C**

START

Define a basis set of a rectangularly pulsed OFDM signal — 702

Define a bilinear transform to a basis set — 704

Apply the bilinear transform to the basis set — 706

Derive results of the bilinear transform — 708

Define the orthonormal dispersive encoder — 710

END

**FIG. 7**

**EP 1 853 018 B1**

**Patent documents cited in the description**

- US 6999503 B
- US 2003039306 A1
- US 2003099302 A1